# EUROPEAN PATENT APPLICATION

(11) **EP 4 653 107 A1**
(43) Date of publication of application: **26.11.2025**
(21) Application number: 23917790.0
(22) Date of filing: 28.12.2023
(51) Int. Cl.: B21D 43/00, B21D 5/02, B25J 13/08

(54) **AUTOMATIC CALCULATING DEVICE AND AUTOMATIC CALCULATING METHOD**

(30) Priority: 16.01.2023 JP 2023004327
(71) Applicant: Amada Co., Ltd., Isehara-shi, Kanagawa 259-1196 (JP)
(72) Inventor: HONMA, Toshiki, Isehara-shi, Kanagawa 259-1196 (JP)
(74) Representative: Grünecker Patent- und Rechtsanwälte PartG mbB
(86) International application number: PCT/JP2023/047173
(87) International publication number: WO 2024/154580

(57) **Abstract**

An automatic calculation device (40) comprises a computer configured to determine an operation mode of a positioning mechanism (14) for positioning the workpiece (W) at a bending position in a bending machine by moving the workpiece with a robot (20). The positioning mechanism (14) includes a plurality of operation modes for performing the positioning of the workpiece (W) depending on a combination of an operation of a pair of back gauges (15a, 15b) and an operation of a side gauge (16). The computer determines the operation mode of the positioning mechanism (14) from among a plurality of operation modes based on a positional relation between a tool and the positioning mechanism (14), and information on the workpiece (W), for each bending process performed on the workpiece (W).

## Description

### [TECHNICAL FIELD]

The present disclosure relates to an automatic calculation device and an automatic calculation method.

### [BACKGROUND ART]

For example, Patent Literature 1 discloses a method of controlling a robot that grips a workpiece, to position the workpiece at a bending position in a bending machine. This bending machine comprises a positioning mechanism including a pair of back gauges configured to position the workpiece in a front-rear direction and a side gauge configured to position the workpiece in a left-right direction.

Similarly to Patent Literature 1, Patent Literature 2 also discloses a method of positioning a workpiece.

### [Citation List]

### [Patent Literature]

[Patent Literature 1] Japanese Patent Application Laid-Open Publication No. 2019-18236
[Patent Literature 2] Japanese Patent Application Laid-Open Publication No. 2018-192542

### [SUMMARY OF INVENTION]

A positioning mechanism of a bending machine and a robot are controlled based on a processing program. In creating this processing program, it is necessary to define an operation mode of the positioning mechanism for each bending process.

Conventionally, operators manually determine the operation mode of the positioning mechanism for each bending process, on a computer that creates the processing program. However, to determine the operation mode, it is necessary to be familiar with operation modes of the positioning mechanism, and a task difficult for novice operators has been required.

An automatic calculation device according to one or more embodiments comprises a computer configured to determine an operation mode of a positioning mechanism for causing a robot to move a workpiece and positioning the workpiece at a bending position in a bending machine, the positioning mechanism comprising a pair of back gauges configured to be abutted against a workpiece edge extending in a left-right direction in the bending machine and to perform the positioning of the workpiece in a front-rear direction, and a side gauge configured to be abutted against a workpiece edge extending in the front-rear direction and to perform the positioning of the workpiece in the left-right direction, and including a plurality of operation modes for performing the positioning of the workpiece depending on a combination of an operation of the side gauge and an operation of the pair of back gauges, the computer being configured to determine the operation mode of the positioning mechanism from among the plurality of operation modes based on a positional relation between a tool and the positioning mechanism, and information on the workpiece, for each bending process performed on the workpiece.

According to the automatic calculation device of one or more embodiments, an appropriate gauge mode is patterned depending on the positional relation between the tool and the positioning mechanism, and the information on the workpiece, so that the automatic calculation device can automatically select the gauge mode suitable for each bending process. Consequently, an operator does not need to manually determine the operation mode of the positioning mechanism.

According to one aspect of the present invention, it is possible to appropriately determine the operation mode of the positioning mechanism regardless of an operator skill level.

### [BRIEF DESCRIPTION OF DRAWINGS]

[FIG. 1] FIG. 1 is a diagram showing the overall configuration of a bending system including an automatic calculation device according to the present embodiment.
[FIG. 2] FIG. 2 is a diagram explaining a first gauge mode.
[FIG. 3A] FIG. 3A is a diagram explaining a second gauge mode.
[FIG. 3B] FIG. 3B is a diagram explaining the second gauge mode.
[FIG. 3C] FIG. 3C is a diagram explaining the second gauge mode.
[FIG. 4A] FIG. 4A is a diagram explaining a third gauge mode.
[FIG. 4B] FIG. 4B is a diagram explaining the third gauge mode.
[FIG. 4C] FIG. 4C is a diagram explaining the third gauge mode.
[FIG. 5] FIG. 5 is a diagram explaining a fourth gauge mode.
[FIG. 6] FIG. 6 is a flowchart showing a flow of processing of an automatic calculation method according to the present embodiment.
[FIG. 7] FIG. 7 is an explanatory view showing cut-raise bending.
[FIG. 8] FIG. 8 is an explanatory view showing a distance to a flange.

### [DESCRIPTION OF EMBODIMENTS]

Hereinafter, with reference to the drawings, an automatic calculation device and an automatic calculation method according to the present embodiment will be described.

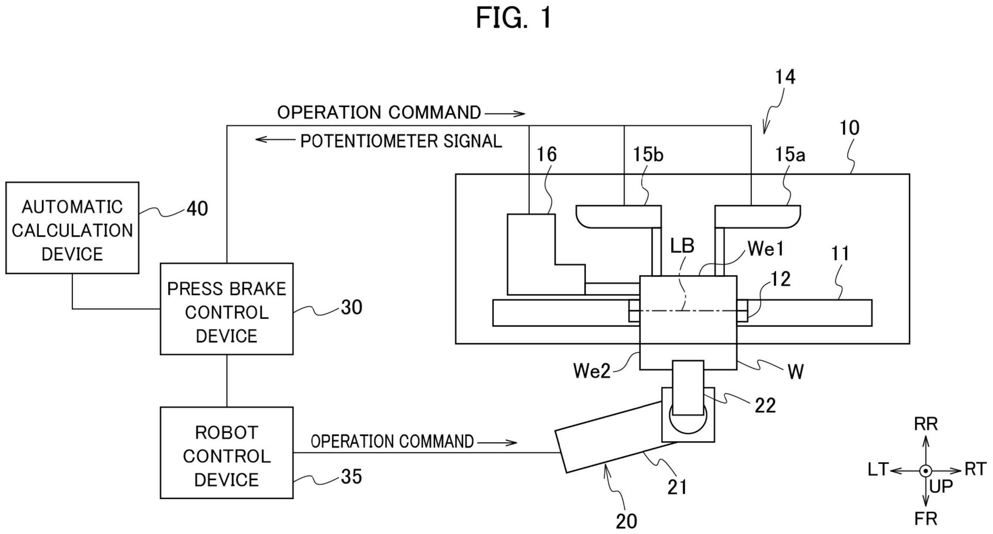

FIG. 1 is a diagram showing the overall configuration of a bending system including the automatic calculation device according to the present embodiment. In the description, directions in the bending system are defined using a left-right direction, a front-rear direction, and an up-down direction. The left-right direction and front-rear direction correspond to two directions that are orthogonal in a horizontal plane, while the up-down direction corresponds to a perpendicular direction. However, these directions are merely used for convenience to describe the bending system. In the drawings, rightward, leftward, upward, downward, forward, and rearward are indicated as RT, LT, UP, DN, FR, and RR, respectively.

An automatic calculation device 40 according to the present embodiment is an automatic calculation device including a computer configured to determine an operation mode of a positioning mechanism 14 for causing a bending robot 20 to move a workpiece W and positioning the workpiece W at a bending position in a bending machine. The positioning mechanism 14 comprises a pair of back gauges 15a and 15b configured to be abutted against a workpiece edge We1 extending in a left-right direction in the bending machine and to perform the positioning of the workpiece W in a front-rear direction, and a side gauge 16 configured to be abutted against a workpiece edge We2 extending in the front-rear direction and to perform the positioning of the workpiece W in the left-right direction, and includes a plurality of operation modes for performing the positioning of the workpiece W depending on a combination of an operation of the pair of back gauges 15a and 15b and an operation of the side gauge 16. The computer determines the operation mode of the positioning mechanism from among the plurality of operation modes based on a positional relation between a tool and the positioning mechanism 14, and information on the workpiece W, for each bending process performed on the workpiece W.

Hereinafter, the detailed configuration of the bending system will be described. The bending system comprises a press brake 10 as an example of a bending machine, a bending robot 20, a press brake control device 30, a robot control device 35, and the automatic calculation device 40.

The press brake 10 is a bending machine that bends the workpiece W at a required angle along a bending line LB. The press brake comprises a lower table 11 and an upper table (not shown) provided to face the lower table 11. The upper table is configured to be movable in the up-down direction. On an upper part of the lower table 11, one or more dies (an example of a lower tool) 12 are mounted along the left-right direction, and on a lower part of the upper table, one or more punches (an example of an upper tool) are mounted along the left-right direction. The die 12 and the punch are arranged corresponding to the bending position of the press brake 10. The bending position refers to a position where bending is executed on the workpiece W by the die 12 and the punch, specifically, the position corresponding to the bending line LB of the workpiece W on a blade tip of the die 12.

The press brake 10 comprises the positioning mechanism 14 for the bending robot 20 to position the workpiece W at the bending position. The positioning mechanism 14 includes the pair of back gauges 15a and 15b, and the side gauge 16.

The pair of back gauges 15a and 15b are arranged behind the lower table 11 and the upper table in top view. The pair of back gauges 15a and 15b are configured to be abutted against the workpiece edge We1 extending in the left-right direction and to position the workpiece W in the front-rear direction. The workpiece edge We1 may only extend in the left-right direction and does not necessarily have to be parallel to the die 12 (in the left-right direction). If the workpiece edge We1 is inclined diagonally to the bending line LB, the pair of back gauges 15a and 15b are caused to be abutted against the workpiece edge We1 that is diagonal. The pair of back gauges 15a and 15b are configured to be movable in the front-rear direction, the left-right direction, and the up-down direction, and can move to any position in response to operation commands output from the press brake control device 30.

At tips of the pair of back gauges 15a and 15b, sensors such as potentiometers (not shown) are provided, allowing the pair of back gauges 15a and 15b to detect the position of the workpiece W in the front-rear direction. When the workpiece edge We1 abuts against the pair of back gauges 15a and 15b, a signal indicating the position of the workpiece W in the front-rear direction is output as a potentiometer signal to the press brake control device 30 from each of the individual back gauges 15a and 15b.

The side gauge 16 is disposed laterally to the pair of back gauges 15a and 15b. The side gauge 16 is configured to be abutted against the workpiece edge We2 extending in the front-back direction and to perform the positioning of the workpiece W in the left-right direction. The side gauge 16 is configured to be movable in the front-rear direction, the left-right direction, and the up-down direction and can move to any position in response to an operation command output from the press brake control device 30.

At a tip of the side gauge 16, a sensor such as a potentiometer (not shown) is provided, allowing the side gauge 16 to detect the position of the workpiece W in the left-right direction. When the workpiece edge We2 abuts against the side gauge 16, the side gauge 16 outputs a signal, indicating the position of the workpiece W in the left-right direction, as a potentiometer signal to the press brake control device 30.

As will be described later, the positioning mechanism 14 includes a plurality of operation modes (hereinafter referred to as "the gauge modes") for performing the positioning of the workpiece W depending on the combination of the operation of the pair of back gauges 15a and 15b and the operation of the side gauge 16.

In such a positioning mechanism 14, the pair of back gauges 15a and 15b and the side gauge 16 are controlled by the press brake control device 30 to be arranged at predetermined positions. In this state, the bending robot 20 moves the workpiece W so that the workpiece edges We1 and We2 abut against the pair of back gauges 15a and 15b and the side gauge 16, and the positioning of the workpiece W can be performed so that the bending line LB of the workpiece W coincides with the bending position of the press brake 10.

The bending robot 20 supplies the workpiece W to the press brake 10. The bending robot 20 comprises a multi-joint robot arm 21 and a robot hand 22 provided at the tip of the robot arm 21, to grip the workpiece W. The bending robot 20 can move the gripped workpiece W in the left-right and front-rear directions. Additionally, the bending robot 20 can also move the gripped workpiece W in the up-down direction. The bending robot 20 can move the workpiece W to any position in response to the operation command output from the robot control device 35.

The press brake control device 30 controls the operation of the press brake 10 based on a processing program created by the automatic calculation device 40. In relation to the present embodiment, the press brake control device 30 controls the operation of the pair of back gauges 15a and 15b, and the operation of the side gauge 16 based on an operation pattern defined in the processing program. The press brake control device 30 is communicably connected to the robot control device 35. The press brake control device 30 controls the operation of the pair of back gauges 15a and 15b, and the operation of the side gauge 16 while cooperating with the robot control device 35.

The robot control device 35 operates the bending robot 20 based on the processing program and performs feedback control of the bending robot 20 based on the potentiometer signal transferred from the press brake control device 30. Consequently, the bending robot 20 moves the gripped workpiece W in the left-right and front-rear directions and positions the workpiece W to the bending position.

When performing bending using the press brake 10 with such a configuration, the bending robot 20 places the workpiece W on the die 12 mounted on the lower table 11. Currently, the bending robot 20 cooperates with the positioning mechanism 14, to perform the positioning of the workpiece W so that the bending line LB of the workpiece W coincides with the bending position of the press brake 10. Then, the press brake control device 30 lowers the upper table toward the lower table 11. Consequently, the workpiece W is pressurized between the die 12 and the punch, and the workpiece W is bent at the desired bending angle in the bending line LB.

The automatic calculation device 40 is realized by a computer. The computer comprises a hardware processor such as a central processing unit (CPU), a memory, and various interfaces. The memory and various interfaces are connected to a hardware processor via a bus. The hardware processor executes the program stored in the memory, to implement various functions provided in the automatic calculation device 40.

The automatic calculation device 40 is loaded with functions of computer aided design (CAM). The automatic calculation device 40 creates a processing program for the press brake control device 30 to control the operation of the press brake 10, and for the robot control device 35 to control the operation of the bending robot 20.

The processing program created by the automatic calculation device 40 is transferred to the press brake control device 30. The processing program transferred to the press brake control device 30 is transferred to the robot control device 35 through the press brake control device 30. The automatic calculation device 40 may store the created processing program in a database within a data management server (not shown). In this case, the press brake control device 30 may read the processing program stored in the database of the data management server.

In relation to the present embodiment, the automatic calculation device 40 determines the gauge mode of the positioning mechanism 14. Specifically, the automatic calculation device 40 determines the gauge mode of the positioning mechanism 14 from among a plurality of gauge modes based on the positional relation between the die 12 and the positioning mechanism 14, and the information on the workpiece W, for each bending process performed on the workpiece W. The gauge mode determined for each bending process is reflected in the processing program that defines the operations of the positioning mechanism 14 and the bending robot 20 in the bending process.

The automatic calculation device 40 holds information on the die 12 and punch for use in each bending process, that is, information such as the positions and number of the dies 12 and punches. In addition, the automatic calculation device 40 holds information on the workpiece, that is, the material, plate thickness, shape, and size of the workpiece W, as well as information such as positions and order of bending lines LB to be bent in each bending process.

Hereinafter, the plurality of gauge modes provided in the positioning mechanism 14 will be described. In the present embodiment, the positioning mechanism 14 includes four operation modes of from a first gauge mode to a fourth gauge mode. In the description of each gauge mode, the movement of the workpiece W is performed by the bending robot 20 controlled by the robot control device 35.

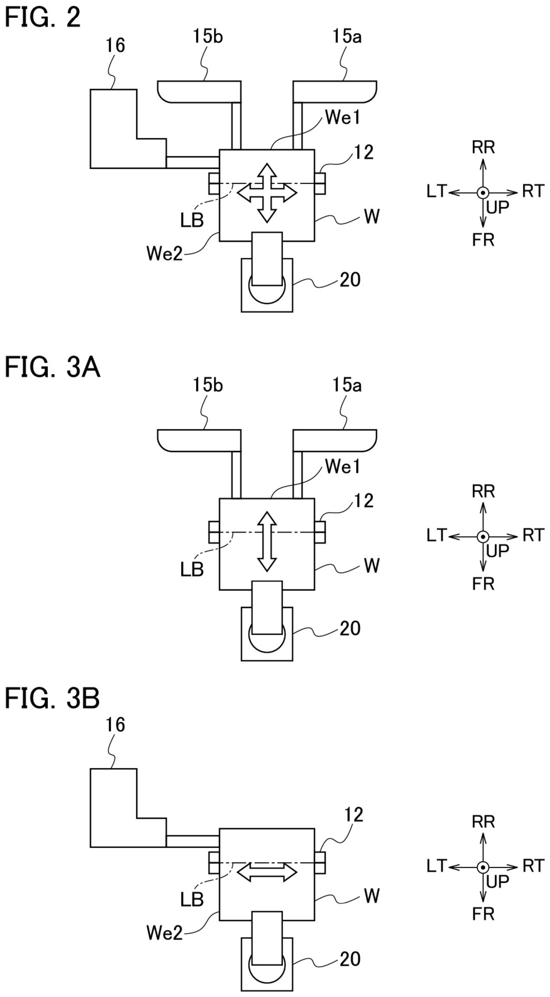

FIG. 2 is a diagram explaining the first gauge mode. The first gauge mode is a gauge mode of performing the positioning of the workpiece W using the pair of back gauges 15a and 15b, and the side gauge 16 simultaneously. This first gauge mode is performed on the workpiece W placed on the die 12.

In the first gauge mode, the workpiece edges We1 extending in the left-right direction are caused to abut against the pair of back gauges 15a and 15b, and the workpiece edge We2 extending in the front-rear direction is caused to abut against the side gauge 16. Consequently, the tilt of the workpiece W is adjusted so that the bending line LB is parallel to the left-right direction, and the workpiece W is properly positioned in the front- rear and left-right directions.

FIGS. 3A to 3C are diagrams explaining the second gauge mode. The second gauge mode is an operation mode of performing the positioning of the workpiece W using the pair of back gauges 15a and 15b, then performing the positioning of the workpiece W using the side gauge 16, and then performing the positioning of the workpiece W using the pair of back gauges 15a and 15b again. In the second gauge mode, the positioning of the workpiece W using the side gauge 16 is performed in a state where the side gauge 16 and the workpiece W are raised above the die 12. In contrast, the positioning of the workpiece W using the pair of back gauges 15a and 15b is performed in a state where the plate-shaped workpiece W is placed on the die 12.

In the second gauge mode, as shown in FIG. 3A, first, the workpiece edge We1 extending in the left-right direction is caused to abut against the pair of back gauges 15a and 15b. This adjusts the tilt of the workpiece W so that the bending line LB is parallel to the left-right direction.

Next, the side gauge 16 and the workpiece W are lifted above the position where the side gauge 16 is caused to be abutted against the workpiece W in the first gauge mode. Both upward movement amounts of the side gauge 16 and the workpiece W are set to be the same. Then, as shown in FIG. 3B, the workpiece edge We2 extending in the front-rear direction is caused to abut against the side gauge 16. This properly positions the workpiece W in the left-right direction. Thereafter, the side gauge 16 and the workpiece W are moved downward until the workpiece W is supported by the die 12.

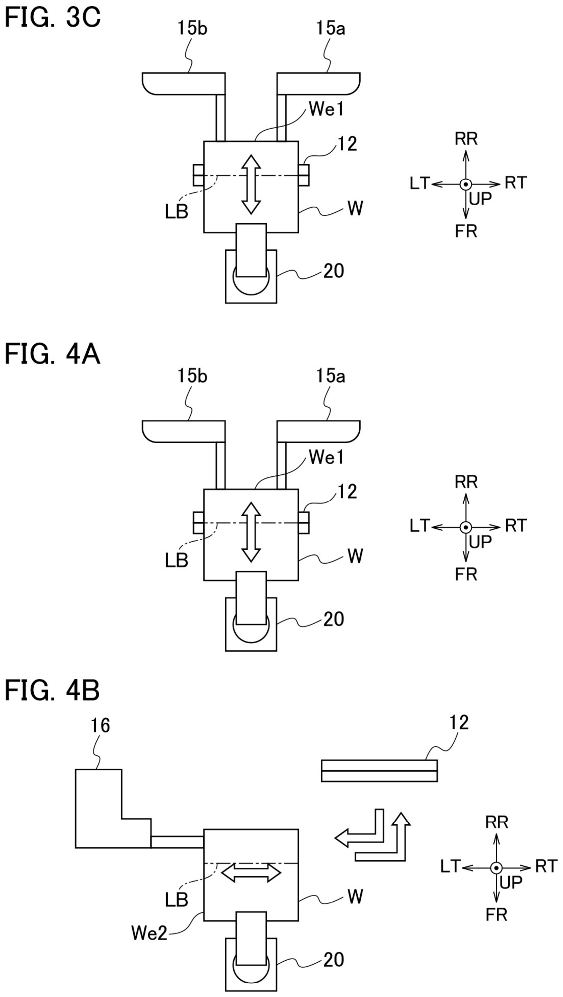

As shown in FIG. 3C, finally, the workpiece edge We1 extending in the left-right direction is caused to abut against the pair of back gauges 15a and 15b. This properly positions the workpiece W in the front-rear direction.

FIGS. 4A to 4C are diagrams explaining the third gauge mode. The third gauge mode is an operation mode of performing the positioning of the workpiece W using the pair of back gauges 15a and 15b, then performing the positioning of the workpiece W using the side gauge 16, and then performing the positioning of the workpiece W using the pair of back gauges 15a and 15b again. In the third gauge mode, the workpiece W is positioned using the side gauge 16 at a position where the side gauge 16 and the workpiece W are moved in the up-down and left-right directions, and the front-rear direction. In contrast, the positioning of the workpiece W using the pair of back gauges 15a and 15b is performed in a state where the plate-shaped workpiece W is placed on the die 12.

In the third gauge mode, as shown in FIG. 4A, first, the workpiece edge We1 extending in the left-right direction is caused to abut against the pair of back gauges 15a and 15b. This adjusts the tilt of the workpiece W so that the bending line LB is parallel to the left-right direction.

Next, as shown in FIG. 4B, compared to the position where the side gauge 16 is caused to be abutted against the workpiece W in the third gauge mode, the side gauge 16 and the workpiece W are moved by a predetermined amount in each of the up-down and left-right directions and the front-rear direction. Currently, the side gauge 16 and the workpiece W are moved so that the workpiece W comes out from between the die 12 and the punch. Then, at the position moved by the predetermined amount, the workpiece edge We2 extending in the front-rear direction is caused to abut against the side gauge 16. This properly positions the workpiece W in the left-right direction. Thereafter, the workpiece W is moved by a predetermined amount in each of the up-down and left-right directions and the front-rear direction. Currently, the direction of the movement is opposite to that when the side gauge 16 and the workpiece W are first moved.

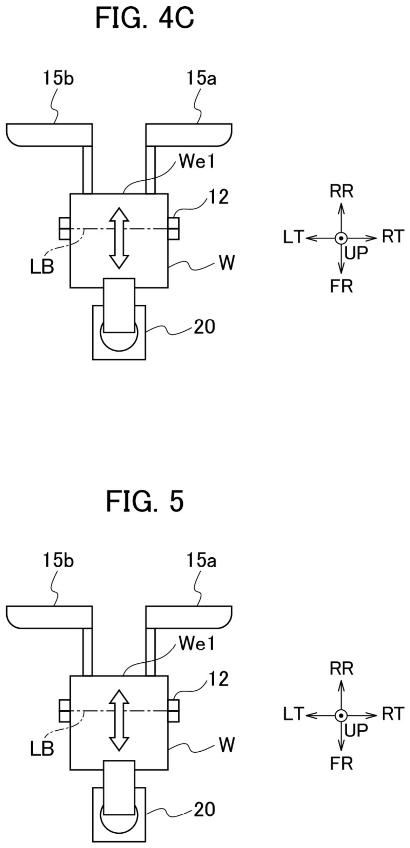

As shown in FIG. 4C, finally, the workpiece edge We2 extending in the left-right direction is caused to abut against the pair of back gauges 15a and 15b. This properly positions the workpiece W in the front-rear direction.

FIG. 5 is a diagram explaining the fourth gauge mode. The fourth gauge mode includes performing the positioning of the workpiece W using only the pair of back gauges 15a and 15b, and the robot 20 performs the positioning in the left-right direction in accordance with an operation taught in advance. This fourth gauge mode is performed in a state where the plate-shaped workpiece W is placed on the die 12.

The fourth gauge mode includes causing the workpiece edge We1 extending in the left-right direction to abut against the pair of back gauges 15a and 15b. Consequently, the tilt of the workpiece W is adjusted so that the bending line LB is parallel to the left-right direction, and the workpiece W is properly positioned in the front-rear direction. Furthermore, the bending robot 20 moves the workpiece W in accordance with the operation taught in advance, and the workpiece W is accordingly properly positioned in the left-right direction.

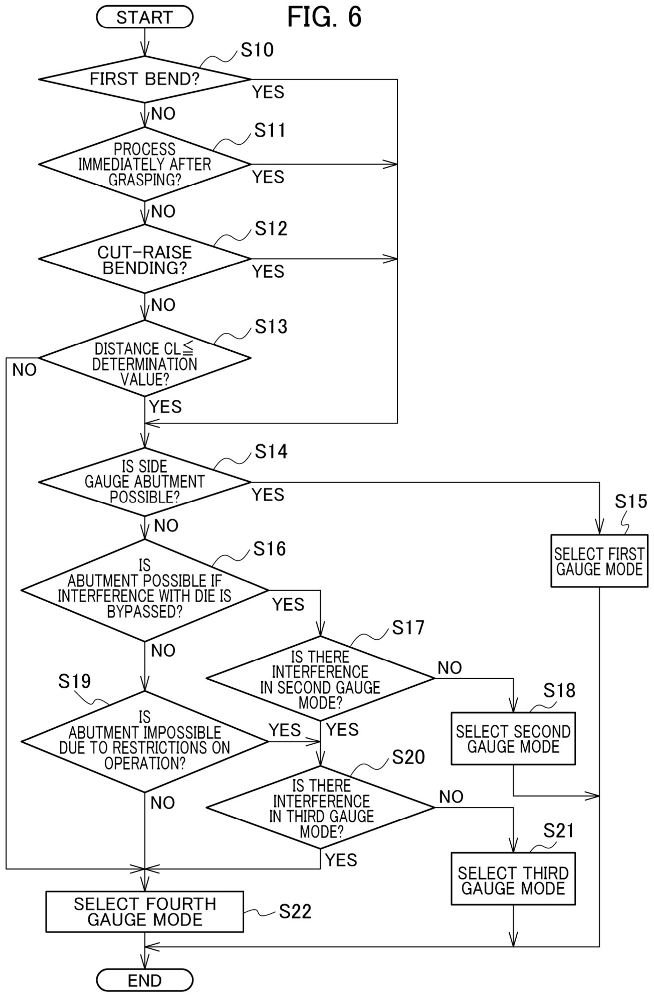

Next, with reference to FIG. 6, an automatic calculation method of determining the gauge mode of the positioning mechanism 14 will be described. FIG. 6 is a flowchart showing a flow of processing of the automatic calculation method according to the present embodiment. This automatic calculation method is executed by the automatic calculation device 40. If a plurality of bending processes (plurality of bending lines LB) is set for one workpiece W, the automatic calculation device 40 performs the processing shown in FIG. 6 for each bending process and determines the gauge mode of the positioning mechanism 14 for each bending process. In determining the gauge mode for each bending process, the automatic calculation device 40 refers to information on the die 12 and punch for use in the bending process, and information on the workpiece W.

In step S10, the automatic calculation device 40 determines whether the bending process to be calculated is a first bend immediately after the workpiece W is supplied to the press brake 10. If the bending process is the first bend, the processing proceeds to step S14 described later, and if the bending process is not the first bend, the processing proceeds to step S11.

In step S11, the automatic calculation device 40 determines whether or not the bending process to be calculated is a process immediately after the workpiece W is grasped by the bending robot 20. If the bending process is the process immediately after grasping, the processing proceeds to step S14 described later, and if the bending process is not the process immediately after grasping, the processing proceeds to step S12.

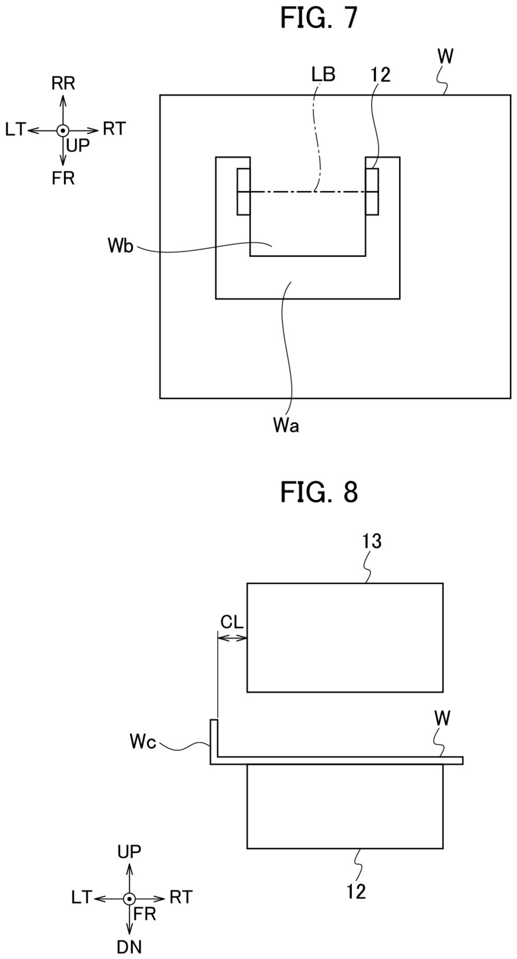

FIG. 7 is an explanatory view showing cut-raise bending. In step S12, the automatic calculation device 40 determines whether the bending process to be calculated is cut-raise bending or not. As shown in FIG. 7, the cut-raise bending refers to the processing of bending a cut and raised piece Wb, which is defined by a slit Wa formed inside the workpiece W, along the bending line LB. If the bending process is cut-raise bending, the processing proceeds to step S14 described later, and if the bending process is not the cut-raise bending, the processing proceeds to step S13.

FIG. 8 is an explanatory view showing a distance to a flange. In step S13, the automatic calculation device 40 determines whether a distance CL between a flange portion Wc formed on the workpiece W and the die 12 or punch 13 is less than or equal to a preset determination value or not. If the distance CL is less than or equal to the determination value, the processing proceeds to step S14, and if the distance CL is larger than the determination value, the processing proceeds to step S22, which will be described later.

Each processing from step S10 to step S13 is provided to determine whether the bending process to be calculated is a bending process that requires high positioning accuracy. That is, if an affirmative determination is made in each determination from step S10 to step S13, it is meant that the bending process requires high positioning accuracy.

If it is determined that the bending process requires high positioning accuracy, the automatic calculation device 40 performs the processing from step S14 to step S21, to select any one gauge mode from among the first to the third gauge modes.

In step S14, the automatic calculation device 40 determines whether the side gauge 16 can be abutted against the workpiece W or not. In this processing, first, the automatic calculation device 40 assumes a state where the workpiece W is placed on the die 12 and the bending line LB coincides with the bending position, as the reference state of the workpiece W. The automatic calculation device 40 makes the above determination on the assumption of the workpiece W in the reference state.

Due to the shape of the workpiece W, the layout of the die 12 or the like, there may be cases where the side gauge 16 cannot be abutted against the workpiece W. In this case, the first gauge mode cannot be selected. Therefore, the automatic calculation device 40 determines applicability of the first gauge mode by making the determination in step S14. If the side gauge 16 can be abutted against the workpiece W, the processing proceeds to step S15. In contrast, if the side gauge 16 cannot be abutted against the workpiece W, the processing proceeds to step S16.

In step S15, the automatic calculation device 40 selects the first gauge mode as the gauge mode of the positioning mechanism 14.

In step S16, the automatic calculation device 40 determines whether the side gauge 16 can be abutted against the workpiece W by bypassing interference with the die 12. If the side gauge 16 can be abutted against the workpiece W by bypassing interference with the die 12, there is room to select the second gauge mode.

Therefore, the automatic calculation device 40 makes the determination in step S16, to determine the applicability of the second gauge mode. If the side gauge 16 can be abutted against the workpiece W by bypassing interference with the die 12, the processing proceeds to step S17. In contrast, if the side gauge 16 cannot be abutted against the workpiece W even by bypassing interference with the die 12, then the processing proceeds to step S19.

In step S17, the automatic calculation device 40 determines whether the side gauge 16 interferes with the die 12 when the second gauge mode is applied. If the side gauge 16 does not interfere with the die 12 in the second gauge mode, the processing proceeds to step S18. In contrast, if the side gauge 16 interferes with the die 12 in the second gauge mode, the processing proceeds to step S20.

In step S18, the automatic calculation device 40 selects the second gauge mode as the gauge mode of the positioning mechanism 14.

In step S19, the automatic calculation device 40 determines whether the side gauge 16 cannot be abutted against the workpiece W due to restrictions on the operation of the side gauge 16. The side gauge 16 can move in all directions, but its operation range is mechanically restricted. Additionally, due to mechanical constraints, the side gauge 16 is restricted from getting closer than a certain distance to the pair of back gauges 15a and 15b. If the reason the side gauge 16 cannot be abutted against the workpiece W lies in the restrictions on the operation of the side gauge 16, there is room to select the third gauge mode.

Therefore, the automatic calculation device 40 makes the determination of step S19, to determine the applicability of the third gauge mode. If the side gauge 16 cannot be abutted against the workpiece W due to the restrictions on the operation of the side gauge 16, the processing proceeds to step S20. In contrast, if the side gauge 16 cannot be abutted against the workpiece W even though the operation of the side gauge 16 is not restricted, the processing proceeds to step S22.

In step S20, the automatic calculation device 40 determines whether the side gauge 16 interferes with the die 12 when the third gauge mode is applied, that is, when the side gauge 16 and the workpiece W are each moved in the up-down and left-right directions, and the front-rear direction. If the side gauge 16 does not interfere with the die 12 in the third gauge mode, the processing proceeds to step S21. In contrast, if the side gauge 16 interferes with the die 12 in the third gauge mode, the processing proceeds to step S22.

In step S21, the automatic calculation device 40 selects the third gauge mode as the gauge mode of the positioning mechanism 14.

In step S22, the automatic calculation device 40 selects the fourth gauge mode as the gauge mode of the positioning mechanism 14.

In a situation where the fourth gauge mode is selected, negative determination is made in all the determinations from step S10 to step S13, that is, it is determined that the bending process does not require high positioning accuracy. Alternatively, in the situation, it is determined that, although this bending process requires high positioning accuracy, the side gauge 16 cannot be abutted against the workpiece edge We2 in any operation mode among the first to third gauge modes.

Through this series of processes, the gauge mode of the positioning mechanism 14 for a certain bending process is determined. The automatic calculation device 40 performs the processing shown in FIG. 6 for all the bending processes in the workpiece W and can accordingly determine the gauge mode of the positioning mechanism 14 in each bending process.

Thus, according to the automatic calculation device 40 of the present embodiment, an appropriate gauge mode is patterned depending on the positional relation between the tool and the positioning mechanism 14, and the information on the workpiece W, so that the automatic calculation device 40 can automatically select the gauge mode suitable for each bending process. Consequently, an operator does not need to manually determine the operation mode of the positioning mechanism, so that the operation mode of the positioning mechanism can be appropriately determined regardless of an operator skill level.

In the present embodiment, the plurality of gauge modes includes the first to fourth gauge modes. To select the appropriate gauge mode from among the first to fourth gauge modes, it is necessary to be familiar with these gauge modes, and if the operator manually determines the gauge mode, determination is a challenging task for novice operators. However, according to the present embodiment, it is possible to automatically determine the gauge mode suitable for each bending process from among the four gauge modes. Consequently, the operator does not need to manually determine the operation mode of the positioning mechanism, so that the operation mode of the positioning mechanism can be appropriately determined regardless of the operator skill level.

In the present embodiment, the automatic calculation device 40 selects any one gauge mode from among the first to third gauge modes, when determining that the bending process requires high positioning accuracy.

In the first to third gauge modes, the positioning of the workpiece W in the front-rear and left-right directions can be performed using the pair of back gauges 15a and 15b and the side gauge 16. Consequently, the automatic calculation device 40 can select a gauge mode that allows for highly accurate positioning in the front-rear and left-right directions.

In the present embodiment, the automatic calculation device 40 selects the first gauge mode, when determining that the side gauge 16 can be abutted against the workpiece edge We2 in a state where the workpiece W is placed on the die 12.

According to this configuration, the positioning of the workpiece W can be performed using the pair of back gauges 15a, 15b and the side gauge 16 simultaneously. Consequently, the automatic calculation device 40 can automatically determine the gauge mode that allows for efficiently performing highly accurate positioning.

In the present embodiment, the automatic calculation device 40 selects the second gauge mode, when determining that, once the side gauge 16 and the workpiece W are lifted above the die 12, the side gauge 16 can be abutted against the workpiece edge We2 without interfering with the die 12.

According to this configuration, the positioning of the workpiece W can be performed using the side gauge 16 while avoiding the interference with the die 12. Consequently, the automatic calculation device 40 can automatically determine the gauge mode that allows for highly accurate positioning.

In the present embodiment, the automatic calculation device 40 selects the third gauge mode, when determining that, once the side gauge 16 and the workpiece W are moved in the up-down and left-right directions, and the front-rear directions, the side gauge 16 can be abutted against the workpiece edge We2 without interfering with the die 12.

According to this configuration, the positioning of the workpiece W can be performed using the side gauge 16 while avoiding the interference with the die 12. Consequently, the automatic calculation device 40 can automatically determine the gauge mode that allows for highly accurate positioning.

In the present embodiment, the automatic calculation device 40 selects the fourth gauge mode in place of the first to third gauge modes, when determining that the side gauge 16 cannot be abutted against the workpiece edge We2 in any gauge mode among the first to third gauge modes.

According to this configuration, the automatic calculation device 40 can autonomously determine a situation where it is not possible to use the first to third gauge modes and automatically select the fourth gauge mode. Consequently, the operator does not need to manually determine the operation mode of the positioning mechanism, so that the operation mode of the positioning mechanism can be appropriately determined regardless of the operator skill level.

In the present embodiment, the automatic calculation device 40 selects the fourth gauge mode, when determining that the bending process does not require high positioning accuracy.

The automatic calculation device 40 can autonomously determine a situation where it is not necessary to use the first to third gauge modes and automatically select the fourth gauge mode. Consequently, the operator does not need to manually determine the operation mode of the positioning mechanism, so that the operation mode of the positioning mechanism can be appropriately determined regardless of the operator skill level.

Additionally, the automatic calculation method according to the present embodiment is an automatic calculation method including: determining, by the computer, the operation mode of the positioning mechanism 14 for causing the bending robot 20 gripping the workpiece W to move the workpiece W and performing the positioning of the workpiece W at the bending position in the press brake. The positioning mechanism 14 comprises the pair of back gauges 15a, 15b configured to be abutted against the workpiece edge We1 extending in the left-right direction in the press brake 10 and to perform the positioning of the workpiece W in the front-rear direction, and the side gauge 16 configured to be abutted against the workpiece edge We2 extending in the front-rear direction and to perform the positioning of the workpiece W in the left-right direction, and includes a plurality of operation modes for performing the positioning of the workpiece W depending on the combination of the operation of the side gauge 16 and the operation of the pair of back gauges 15a and 15b. The method further includes determining, by the computer, the operation mode of the positioning mechanism 14 from among the plurality of operation modes based on the positional relation between the tool and the positioning mechanism 14, and the information on the workpiece W, for each bending process of the workpiece W.

This automatic calculation method is provided with features corresponding to the above automatic calculation device, so that the gauge mode suitable for each bending process can be selected from among the plurality of gauge modes. Consequently, the operator does not need to manually determine the operation mode of the positioning mechanism, so that the operation mode of the positioning mechanism can be appropriately determined regardless of the operator skill level.

As described above, although the embodiment of the present invention has been described, it should be understood that the discussions and drawings that form part of this disclosure do not limit this invention. From this disclosure, various alternative embodiments, examples, and operational techniques will become apparent to those skilled in the art.

The disclosure of the present application relates to the subject described in Japanese Patent Application No. 2023-004327 filed with Japan Patent Office on January 16, 2023, the entire disclosure content of which are hereby incorporated by reference.

## Claims

1. An automatic calculation device, comprising a computer configured to determine an operation mode of a positioning mechanism for positioning a workpiece at a bending position in a bending machine by moving the workpiece with a robot,
the positioning mechanism comprising:
a pair of back gauges configured to be abutted against a workpiece edge extending in a left-right direction in the bending machine and to perform the positioning of the workpiece in a front-rear direction; and
a side gauge configured to be abutted against a workpiece edge extending in the front-rear direction and to perform the positioning of the workpiece in the left-right direction, and including:
a plurality of operation modes for performing the positioning of the workpiece depending on a combination of an operation of the side gauge and an operation of the pair of back gauges,
the computer being configured to
determine a operation mode of the positioning mechanism from among the plurality of operation modes based on a positional relation between a tool and the positioning mechanism, and information on the workpiece, for each bending process performed on the workpiece.

2. The automatic calculation device according to claim 1, wherein the plurality of operation modes includes:
a first operation mode of performing the positioning of the workpiece using the pair of back gauges and the side gauge simultaneously;
a second operation mode of performing the positioning of the workpiece using the pair of back gauges, then performing the positioning of the workpiece using the side gauge, and then performing the positioning of the workpiece using the pair of back gauges again, the positioning of the workpiece using the side gauge being performed in a state where the side gauge and the workpiece are lifted above a lower tool;
a third operation mode of performing the positioning of the workpiece using the pair of back gauges, then performing the positioning of the workpiece using the side gauge, and then performing the positioning of the workpiece using the pair of back gauges, the positioning of the workpiece using the side gauge being performed at a position where the side gauge and the workpiece are moved in the up-down and left-right directions, and the front-rear direction; and
a fourth operation mode of performing the positioning of the workpiece using only the pair of back gauges, and causing the robot to perform the positioning in the left-right direction in accordance with an operation taught in advance.

3. The automatic calculation device according to claim 2, wherein the computer
selects one operation mode from among the first to third operation modes, when determining that a bending process requires high positioning accuracy.

4. The automatic calculation device according to claim 3, wherein the computer
selects the first operation mode, when determining that the side gauge is allowed to be abutted against the workpiece edge in a state where the workpiece is placed on the lower tool.

5. The automatic calculation device according to claim 4, wherein the computer
selects the second operation mode, when determining that, once the side gauge and the workpiece are lifted above the lower tool, the side gauge is allowed to be abutted against the workpiece edge without interfering with the lower tool.

6. The automatic calculation device according to claim 5, wherein the computer
selects the third operation mode, when determining that, once the side gauge and the workpiece are moved in the up-down and left-right directions, and the front-rear direction, the side gauge is allowed to be abutted against the workpiece edge without interfering with the lower tool.

7. The automatic calculation device according to claim 6, wherein the computer
selects the fourth operation mode without selecting the first to third operation modes, when determining that the side gauge is not to allowed to be abutted against the workpiece edge in any operation mode among the first to third operation modes.

8. The automatic calculation device according to claim 2, wherein the computer
selects the fourth operation mode, when determining that the bending process does not require high positioning accuracy.

9. An automatic calculation method comprising:
determining, by a computer, an operation mode of a positioning mechanism for causing a robot to move a workpiece and positioning the workpiece at a bending position in a bending machine,
the positioning mechanism comprising:
a pair of back gauges configured to be abutted against a workpiece edge extending in a left-right direction in the bending machine and to perform the positioning of the workpiece in a front-rear direction; and
a side gauge configured to be abutted against a workpiece edge extending in the front-rear direction and to perform the positioning of the workpiece in the left-right direction, and including:
a plurality of operation modes for performing the positioning of the workpiece depending on a combination of an operation of the side gauge and an operation of the pair of back gauges,
the automatic calculation method further comprising:
determining, by the computer, an operation mode of the positioning mechanism from among the plurality of operation modes based on a positional relation between a tool and the positioning mechanism, and information on the workpiece, for each bending process on the workpiece.
